# EUROPÄISCHE PATENTSCHRIFT

(11) **EP 3 500 974 B1**
(45) Veröffentlichungstag und Bekanntmachung des Hinweises auf die Patenterteilung: **09.08.2023**
(21) Anmeldenummer: 17732358.1
(22) Anmeldetag: 13.06.2017
(51) Int. Cl.: G06V 20/58

(54) **VERFAHREN UND VORRICHTUNG ZUM UNTERSTÜTZEN EINES FAHRERASSISTENZSYSTEMS IN EINEM KRAFTFAHRZEUG**
METHOD AND DEVICE FOR SUPPORTING A DRIVER ASSISTANCE SYSTEM IN A MOTOR VEHICLE
PROCÉDÉ ET DISPOSITIF D'ASSISTANCE D'UN SYSTÈME D'AIDE À LA CONDUITE D'UN VÉHICULE À MOTEUR

(30) Priorität: 16.08.2016 DE 102016215249
(43) Veröffentlichungstag der Anmeldung: 26.06.2019
(73) Patentinhaber: Volkswagen Aktiengesellschaft, 38440 Wolfsburg (DE)
(72) Erfinder: MAX, Stephan, 38518 Gifhorn (DE); WEISS, Kristian, 13187 Berlin (DE); BAUER, Sascha, 12103 Berlin (DE); KIRLANGIC, Mehmet Eylem, 38440 Wolfsburg (DE); WEGE, Andreas, 10557 Berlin (DE); KONNOPKA, Robert, 13129 Berlin (DE); KRÜGER, Lars, 16244 Schorfheide (DE); KLANDT, Jesko, 13088 Berlin (DE); TENDYCK, Christian, 10629 Berlin (DE)
(86) Internationale Anmeldenummer: PCT/EP2017/064407
(87) Internationale Veröffentlichungsnummer: WO 2018/033269

(56) Entgegenhaltungen:
- US-A1- 2009 228 204
- US-A1- 2011 040 481
- US-A1- 2015 025 795
- DAN BARNES ET AL: "Exploiting 3D semantic scene priors for online traffic light interpretation", 2015 IEEE INTELLIGENT VEHICLES SYMPOSIUM (IV), 1. Juni 2015 (2015-06-01), Seiten 573-578, XP055399150, DOI: 10.1109/IVS.2015.7225746

## Beschreibung

Die Erfindung betrifft ein Verfahren und eine Vorrichtung zum Unterstützen eines Fahrerassistenzsystems in einem Kraftfahrzeug.

Moderne Kraftfahrzeuge bieten eine Vielzahl von Fahrerassistenzsystemen, welche den Fahrer beim Führen des Kraftfahrzeugs unterstützen. Solche Fahrerassistenzsysteme können beispielsweise Einparkassistenten, Spurhalteassistenten oder Navigationseinrichtungen etc. sein.

Zum Betrieb der Fahrerassistenzsysteme wird in der Regel ein Umfeld des Kraftfahrzeugs mittels einer Umfeldsensorik erfasst und erzeugte Umfelddaten ausgewertet. Hierbei kann es dazu kommen, dass die Umfelddaten falsch interpretiert werden und bei der Auswertung falsche Schlüsse gezogen werden, beispielsweise, weil Objekte in dem Umfeld nicht richtig erkannt werden.

Aus dem Fachartikel Dan Barnes ET AL: "Exploiting 3D semantic scene priors for online traffic light interpretation", 2015 IEEE Intelligent Vehicles Symposium (IV), 1. Juni 2015 (2015-06-01), Seiten 573 - 578, XP055399150 sowie der US 2015/025795 A1 sind jeweils Verfahren zum Unterstützen eines Fahrzeugassistenzsystems in einem Kraftfahrzeug bekannt, wobei in einer bereitgestellten Karte klassifizierte Objekte an zugehörigen Positionen hinterlegt sind. Weiter werden Umfelddaten mittels mindestens einer Umfeldsensorik des Fahrerassistenzsystems erfasst und mittels einer Auswerteeinrichtung des Fahrerassistenzsystems ausgewertet, wobei die erfassten Umfelddaten zur Objekterkennung in Abhängigkeit der in der Karte hinterlegten klassifizierten Objekte ausgewertet werden.

Der Erfindung liegt das technische Problem zu Grunde, ein Verfahren und eine Vorrichtung zum Unterstützen eines Fahrerassistenzsystems in einem Kraftfahrzeug zu schaffen, bei denen eine Auswertung von erfassten Umfelddaten verbessert ist.

Die technische Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Die Kernidee der Erfindung ist, ein bereits bekanntes Vorwissen, welches in Form von klassifizierten Objekten in einer Karte bereitgestellt wird, bei der Auswertung von erfassten Umfelddaten zu berücksichtigen. Auf diese Weise kann eine Objekterkennung und Objektklassifizierung in erfassten Umfelddaten verbessert durchgeführt werden. Hierzu werden Umfelddaten von mindestens einer Umfeldsensorik eines Fahrerassistenzsystems erfasst und in einer Auswerteeinrichtung des Fahrerassistenzsystems ausgewertet. Das Auswerten umfasst ein Erkennen von Objekten in den erfassten Umfelddaten. Die Objekte können hierbei insbesondere klassifiziert werden. Das Auswerten wird mittels Mustererkennungsverfahren durchgeführt. Die Mustererkennungsverfahren ermitteln beispielsweise für bestimmte Objekte charakteristische Merkmale, anhand derer das Objekt identifiziert und/oder klassifiziert werden kann. Durch Bestimmen von Relativpositionen der Objekte im Umfeld des Kraftfahrzeugs kann das Kraftfahrzeug sich mittels eines Vergleichs mit den in der Karte hinterlegten klassifizierten Objekten in der Karte lokalisieren und somit in dem Umfeld orientieren.

Das Kraftfahrzeug lokalisiert sich beispielsweise in der Karte über einen Vergleich erkannter Objekte und deren Relativpositionen im Umfeld des Kraftfahrzeugs mit in der Karte hinterlegten Objekten. Es kann hierzu vorgesehen sein, dass eine grobe Lokalisierung auch mittels eines Globalen Positionsbestimmungssytems (z.B. GPS) durchgeführt wird. Anhand der bestimmten Position ermittelt die Steuerung dann beispielsweise Objekte, welche für das aktuelle Umfeld in der Karte hinterlegt sind. Die Objekte, deren Relativpositionen und deren Klassifizierungen werden dann beim Auswerten berücksichtigt.

Dabei ist vorgesehen, dass eine Existenzwahrscheinlichkeit eines in den erfassten Umfelddaten erkannten Objekts auf Grundlage von mindestens einem in der Karte hinterlegten klassifizierten Objekt verringert wird. Dies ist beispielswiese von Vorteil, wenn vermieden werden soll, dass das Assistenzsystem auf Grund von "Phantomobjekten" eine Reaktion auslöst. "Phantomobjekte" sollen hierbei Objekte sein, welche von dem Fahrerassistenzsystem falsch interpretiert werden. Auf Grundlage der in der Karte hinterlegten klassifizierten Objekte können erkannte Objekte jedoch plausibilisiert werden und, sofern sie nicht relevant sind für das Fahrerassistenzsystem, ihre jeweiligen Existenzwahrscheinlichkeiten verringert werden. Im Extremfall kann ein solches Objekt hierüber sogar komplett verworfen werden.

Erhält das Fahrerassistenzsystem beispielsweise Umfelddaten von einer Radarsensorik, so können mittels des beschriebenen Verfahrens Objekte im Umfeld des Kraftfahrzeugs, welche aus einer größeren Entfernung als Hindernis erscheinen, sich bei Annäherung aber als kein Hindernis herausstellen, entsprechend über ein Verringern ihrer Existenzwahrscheinlichkeit als weniger relevant eingestuft werden. Objekte dieser Art sind für Radarsensoren insbesondere große metallische Objekte, beispielsweise Gullideckel oder Schilderbrücken auf Autobahnen. Sind diese "Phantomobjekte" in der Karte hinterlegt, werden sie bei einer erneuten Erfassung und Auswertung entsprechend erkannt und über die Verringerung der Existenzwahrscheinlichkeit beim Auswerten als weniger relevant eingestuft oder sogar verworfen.

Ein weiteres Beispiel in Zusammenhang mit einer Fernlichtabblendautomatik verdeutlicht die Vorteile des Verfahrens. Eine solche Fernlichtabblendautomatik (maskiertes Dauerfernlicht) wird bei Dauerfernlicht eingesetzt, um nach einem Erfassen und Erkennen von entgegenkommenden Kraftfahrzeugen das Fernlicht automatisch auf Abblendlicht umzuschalten. Hierbei können sich statische Lichtquellen, wie beispielsweise Straßenlaternen, störend auswirken, wenn diese fälschlicherweise als entgegenkommende Kraftfahrzeuge erkannt werden. Das beschriebene Verfahren ermöglicht es nun, auf Grundlage von für die Straßenlaternen hinterlegten klassifizierten Objekten in der Karte, ein Umschalten auf Abblendlicht zu vermeiden, wenn aus dem Kontext deutlich wird, dass es sich bei erfassten Lichtquellen nicht um die Scheinwerfer entgegenkommender Kraftfahrzeuge handelt, sondern um die Straßenlaternen. Die erkannten Objekte werden dann anhand der in der Karte für diese Positionen hinterlegten klassifizierten Objekte plausibilisiert und, sofern sie nicht relevant sind für das entsprechende Fahrerassistenzsystem, in diesem Beispiel die Fernlichtabblendautomatik, über eine verringerte Existenzwahrscheinlichkeit als weniger relevant eingestuft oder sogar als nicht relevant verworfen. Das Fernlicht wird im Beispiel somit nicht auf Abblendlicht umgeschaltet. Dies stellt einen deutlichen Komfortgewinn dar und erhöht die Sicherheit beim Führen des Kraftfahrzeugs bei Nacht.

Eine Existenzwahrscheinlichkeit eines in den erfassten Umfelddaten nicht eindeutig erkannten Objekts wird auf Grundlage von mindestens einem in der Karte hinterlegten klassifizierten Objekt erhöht. Die Existenzwahrscheinlichkeit soll hierbei die Wahrscheinlichkeit einer Existenz eines relevanten Objekts beschreiben. Ein solches nicht eindeutig erkanntes Objekt kann beispielsweise eine Straßenmarkierung sein, welche teilweise von Blättern oder Schnee verdeckt ist. In der bereitgestellten Karte ist diese Straßenmarkierung als ein klassifiziertes Objekt (oder als mehrere klassifizierte Objekte) hinterlegt, so dass auch bei nicht eindeutiger Erkennung der Straßenmarkierung in den erfassten Umfelddaten darauf geschlossen werden kann, dass die Straßenmarkierung an dieser Position vorliegt. Durch das beschriebene Verfahren wird die Objekterkennung in den erfassten Umfelddaten also robuster.

In einer Ausführungsform ist vorgesehen, dass mindestens ein Parameter des Fahrerassistenzsystems in Abhängigkeit von mindestens einem in der Karte hinterlegten klassifizierten Objekt konfiguriert wird. Auf diese Weise können sowohl die Umfeldsensorik als auch die Auswerteeinrichtung an die im Umfeld erwarteten Objekte angepasst werden.

Insbesondere ist diesbezüglich in einer Ausführungsform vorgesehen, dass der mindestens eine Parameter eine Auflösung angibt, mit welcher zumindest ein Teil der erfassten Umfelddaten ausgewertet wird. Auf diese Weise ist es möglich, für bestimmte Bereiche oder für bestimmte Richtungen bzw. Raumwinkel des Umfeldes die Auflösung der Auswertung anzupassen. So können Bereiche oder Richtungen des Umfeldes, in denen bestimmte klassifizierte Objekte, beispielsweise Objekte, welcher von besonderer Relevanz sind, wie zum Beispiel Ampeln oder Verkehrsschilder mit wichtigen Verkehrsleitinformationen, mit einer erhöhten Auflösung und somit detaillierter ausgewertet werden als andere Bereiche, in denen keine oder weniger relevante Objekte erwartet werden. Auf diese Weise kann Rechenleistung, welche zur Auswertung benötigt wird, eingespart werden.

Es kann vorgesehen sein, dass die Umfeldsensorik eine Kamera ist. Die Kamera erfasst dann Umfelddaten in Form von Abbildungen des Umfeldes. In einer erfassten Abbildung kann dann beispielswiese ein bestimmter Bereich, welcher mit einer bestimmten Richtung bzw. einem bestimmten Raumwinkel des Umfeldes korrespondiert detaillierter ausgewertet werden als andere Bereiche. Wird beispielsweise eine Ampel oder ein Verkehrsschild in einer bestimmten Richtung bzw. Raumwinkel erwartet, so wird der mit dieser Richtung bzw. Raumwinkel korrespondierende Bereich in der Abbildung mit einer größeren Auflösung ausgewertet als die restlichen Bereiche. Der Rechenaufwand für die Auswertung der Umfelddaten kann hierdurch deutlich reduziert werden.

In einer weiteren Ausführungsform ist vorgesehen, dass ein Objekt, das in der Karte hinterlegt ist, welches jedoch von der Umfeldsensorik nicht erfasst wird und/oder von der Auswerteeinrichtung in den erfassten Umfelddaten nicht erkannt wird, von dem Fahrerassistenzsystem berücksichtigt wird. Auf diese Weise können auch Objekte, welche temporär oder auf Grund einer ungünstigen Erfassungsrichtung oder eines ungünstigen Erfassungswinkel- oder Erfassungsraumwinkelbereichs sich nicht in den erfassten Umfelddaten abbilden, trotzdem von dem Fahrerassistenzsystem berücksichtigt werden. So können beispielsweise Hindernisse, welche in der Karte klassifiziert hinterlegt sind, aktuell aber nicht erfasst werden, beispielsweise auf Grund aktuell vorliegender Witterungsbedingungen, trotzdem von dem Fahrerassistenzsystem berücksichtigt werden.

In einer weiteren Ausführungsform ist vorgesehen, dass die Objekte nach mindestens einer der folgenden Klassen klassifiziert sind oder werden: einer Existenzwahrscheinlichkeit, einer Objektart, einer sensorikabhängigen Erfassungswahrscheinlichkeit, einer Verkehrsleitrelevanz, einer Mindestauflösung und/oder einer Witterungsabhängigkeit.

Eine Existenzwahrscheinlichkeit bildet beispielsweise eine Wahrscheinlichkeit für die Existenz eines bestimmten Objekts ab. Eine solche Existenzwahrscheinlichkeit kann beispielsweise auch abhängig von einer Tages-, Wochen- oder Jahreszeit sein. So ist insbesondere eine Vegetation im Sommer kräftiger ausgebildet als im Winter, wodurch mit der Vegetation korrespondierende Objekte entsprechend unterschiedlich ausgebildet sind bzw. sich im Jahresverlauf verändern.

Eine Objektart bezeichnet insbesondere die Art des erfassten Objektes im Allgemeinen oder auf ein bestimmtes Fahrerassistenzsystem bezogenen Kontext. Einige nicht abschließende Beispiele für Objektarten sind: Verkehrszeichen, Vegetation, Straßenmarkierungen, Bordsteine, Ampeln, Häuserfassaden, Leitplanken, Leitpfosten, Straßenlaternen und Ortsschilder.

Eine sensorikabhängige Erfassungswahrscheinlichkeit soll insbesondere die Eignung des Objekts bezeichnen, von einem bestimmten Sensor oder einer bestimmten Sensorart erfasst werden zu können. Eine solche sensorikabhängige Erfassungswahrscheinlichkeit kann insbesondere auch richtungsabhängig sein. So kann beispielswiese ein flaches Verkehrsschild von einem Radarsensor oder einer Kamera von vorne sehr gut erfasst werden, von der Seite hingegen nur sehr schlecht.

Eine Verkehrsleitrelevanz bezeichnet die Eignung bzw. die Eigenschaft eines Objekts als Verkehrsleitkennzeichnung zu dienen. So haben beispielsweise Fahrbahnmarkierungen, die einzelne Fahrspuren kennzeichnen und begrenzen eine hohe Verkehrsleitrelevanz, eine Häuserfassade hingegen eine niedrige Verkehrsleitrelevanz. Ebenso hat ein Schild, welches für eine touristisch interessante Sehenswürdigkeit wirbt im Gegensatz zu einem Geschwindigkeitsbegrenzungsschild eine geringere Verkehrsleitrelevanz.

Eine Mindestauflösung soll insbesondere eine objektabhängige Detailgröße bezeichnen, welche von einem Sensor erfasst werden muss, damit das Objekt richtig erkannt wird. Um Richtungsangaben für verschiedene Orte auf einem Verkehrsschild aus einer bestimmten Entfernung erkennen zu können, müssen die auf dem Verkehrsschild abgedruckten Buchstaben und Zeichen mit einer Mindestauflösung erfasst werden. Hierbei kann insbesondere vorgesehen sein, dass die Mindestauflösung situationsabhängig aus der objektabhängigen Detailgröße abgeleitet wird. Liegt die Detailgröße beispielsweise bei 1 cm, so muss bei einem großen Abstand der Sensorik von dem Objekt eine höhere Mindestauflösung verwendet werden als bei kleinem Abstand. Die Mindestauflösung kann also in Abhängigkeit des Abstands und der verwendeten Umfeldsensorik berechnet werden.

Eine Witterungsabhängigkeit soll eine Abhängigkeit des Objekts von einer Witterung bezeichnen. Ist die Umfeldsensorik beispielsweise eine Kamera, so lassen sich Objekte bei starkem Regen schwerer erfassen und erkennen als bei Sonnenschein. Insbesondere kann die Witterungsabhängigkeit auch in Abhängigkeit der verwendeten Umfeldsensorik bereitgestellt werden.

In einer Ausführungsform ist vorgesehen, dass die Karte mittels einer Kartenerstellungseinrichtung bereitgestellt wird. Eine solche Kartenerstellungseinrichtung kann beispielsweise in dem Kraftfahrzeug ausgebildet sein. Die Kartenerstellungseinrichtung erhält von einer Umfeldsensorik, beispielsweise der gleichen Umfeldsensorik, welche das Fahrerassistenzsystem verwendet, Umfelddaten. In den erhaltenen Umfelddaten erkennt die Kartenerstellungseinrichtung Objekte mittels gängiger Mustererkennungsverfahren. Die erkannten Objekte werden klassifiziert und einer zugehörigen Position in der Karte zugeordnet. Eine solche Position kann insbesondere dreidimensional sein. Die Klassifizierung(en) wird (werden) dem Objekt und der Position des Objekts zugeordnet, so dass diese nach Bereitstellen der Karte abgerufen werden können.

Es kann auch vorgesehen sein, dass die Kartenerstellungseinrichtung außerhalb des Kraftfahrzeugs ausgebildet ist. Beispielsweise kann die Karte von einem kommerziellen oder nicht-kommerziellen Dienst bereitgestellt werden. Die Karte wird dann unabhängig von dem Kraftfahrzeug erstellt, beispielsweise mittels eines dafür vorgesehenen Kartographierungsfahrzeugs. Die erstellte Karte wird anschließend ausgewertet, überarbeitet und gegebenenfalls angereichert mit weiteren Umfelddaten, Objekten und Klassifizierungen. Die auf diese Weise erstellte Karte wird dann beispielsweise über einen Server dem Kraftfahrzeug bzw. der Vorrichtung bereitgestellt.

Es kann ferner vorgesehen sein, dass die erstellten Karten von unterschiedlichen Diensten oder Kraftfahrzeugen untereinander ausgetauscht und/oder ergänzt werden. Auf diese Weise kann stets ein aktuelles Abbild der physischen Welt erzeugt und bereitgestellt werden.

In einer Ausführungsform ist vorgesehen, dass die Karte auf Grundlage der in den erfassten Umfelddaten erkannten Objekte aktualisiert wird. Hierzu werden die erkannten Objekte mit ihren Klassifizierungen in der Karte hinterlegt und, sofern dies möglich ist, ältere Objekte an derselben Position durch aktuelle Objekte und/oder Klassifizierungen ersetzt. Es ist jedoch hierbei darauf zu achten, dass nur bei ausreichender Wahrscheinlichkeit, dass ein aktuelles Objekt sich wirklich an der entsprechenden Position befindet und eine entsprechende Klassifizierung aufweist, dieses Objekt das bisherige Objekt in der Karte ersetzen sollte. Ein Kriterium, welches beispielsweise erfüllt sein müsste, damit ein Ersetzen der Objekte und/oder der Klassifizierung durchgeführt wird, ist eine ausreichend hohe Auflösung, mit der das aktuelle Objekt erfasst sein muss. Nur wenn die Auflösung ausreichend hoch ist, wird das Objekt und/oder die Klassifizierung ersetzt. Ist die Auflösung hingegen nicht ausreichend, so wird für das entsprechende Objekt und/oder die Klassifizierung keine Aktualisierung in der Karte durchgeführt.

In einer Ausführungsform ist vorgesehen, dass die Umfeldsensorik eine Kamera ist. Über die Kamera können für einen bestimmten Raumwinkel visuelle Abbildungen des Umfeldes erfasst werden. In den erfassten Abbildungen können dann mittels Mustererkennungsverfahren Objekte und deren Klassifizierungen erkannt werden.

In weiteren Ausführungsformen ist vorgesehen, dass das Fahrerassistenzsystem eine Lokalisierungseinrichtung oder eine Navigationseinrichtung oder ein Spurhalteassistent oder ein Einparkassistent oder ein Lichtassistent oder eine Verkehrszeichenerkennungseinrichtung ist.

Teile der Vorrichtung können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform einer Vorrichtung zum Unterstützen eines Fahrerassistenzsystems in einem Kraftfahrzeug;
- Fig. 2a: eine schematische Darstellung einer typischen Szene im Straßenverkehr an einer Kreuzung zur Verdeutlichung der Erfindung;
- Fig. 2b: eine zu der in Fig. 2a dargestellten Szene zugehörige schematische Karte, in der klassifizierte Objekte hinterlegt sind;
- Fig. 3a: eine schematische Darstellung einer weiteren typischen Szene im Straßenverkehr auf einer Landstraße bei Nacht zur Verdeutlichung der Erfindung;
- Fig. 3b: eine zu der in Fig. 3a dargestellten Szene zugehörige schematische Karte, in der klassifizierte Objekte hinterlegt sind;
- Fig. 4: ein schematisches Ablaufdiagramm eines Verfahrens zum Unterstützen eines Fahrerassistenzsystems in einem Kraftfahrzeug.

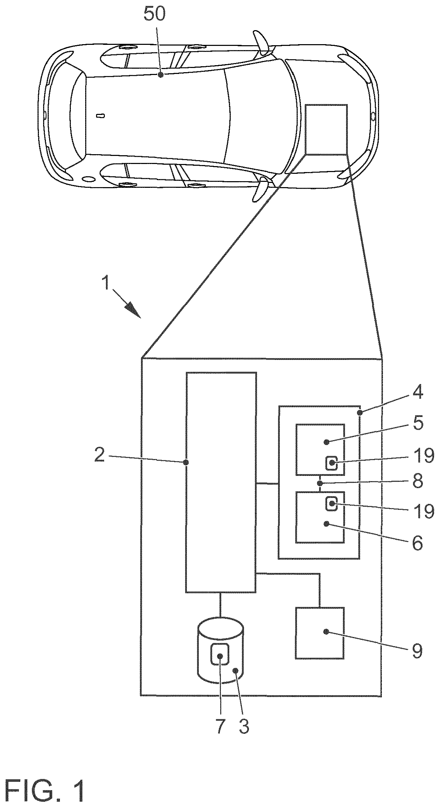

In Fig. 1 ist eine schematische Darstellung einer Ausführungsform einer Vorrichtung 1 zum Unterstützen eines Fahrerassistenzsystems 4 in einem Kraftfahrzeug 50 gezeigt. Die Vorrichtung 1 umfasst eine Steuerung 2, einen Speicher 3 und ein Fahrerassistenzsystem 4. Das Fahrerassistenzsystem 4 umfasst eine Umfeldsensorik 5 und eine Auswerteeinrichtung 6. Das Fahrerassistenzsystem 4 kann beispielsweise eine Lokalisierungseinrichtung, eine Navigationseinrichtung, ein Spurhalteassistent, ein Einparkassistent, ein Lichtassistent, eine Verkehrszeichenerkennungseinrichtung oder eine andere entsprechende Einrichtung sein, welche den Fahrer beim Führen des Kraftfahrzeugs 50 unterstützt.

Die Umfeldsensorik 5, beispielsweise eine Kamera, erfasst ein aktuelles Umfeld des Kraftfahrzeugs 50 und führt erfasste Umfelddaten 8 der Auswerteeinrichtung 6 zu. Diese Umfelddaten 8 können beispielsweise erfasste Abbildungen des Umfelds sein. In den erfassten Umfelddaten 8 erkennt die Auswerteeinrichtung 6 mittels Mustererkennungsverfahren Objekte und klassifiziert diese.

In dem Speicher 3 ist eine Karte 7 hinterlegt, in der klassifizierte Objekte an zugehörigen Positionen hinterlegt sind. Generell ist es dem Kraftfahrzeug 50 möglich, sich aufgrund der in der Karte 7 hinterlegten klassifizierten Objekte und deren zugehörigen Positionen in einem Umfeld zu lokalisieren.

Die Karte 7 kann beispielsweise über eine hierzu vorgesehene Kartenerstellungseinrichtung 9 bereitgestellt werden. Die Kartenerstellungseinrichtung 9 hat die Karte beispielsweise auf Grundlage von vorher erfassten Umfelddaten erstellt oder über eine Schnittstelle zur Verfügung gestellt bekommen und die Karte 7 zum späteren Abruf in dem Speicher 3 hinterlegt.

Es wird hierbei davon ausgegangen, dass das Kraftfahrzeug 50 sich bereits im Umfeld lokalisiert hat, beispielsweise mittels einer hierfür ausgebildeten Einrichtung unter Berücksichtigung der Karte 7 oder mittels eines Globalen Positionsbestimmungssystems (z.B. GPS). Erst nach diesem ersten Lokalisieren ruft die Steuerung 2 die hinterlegten klassifizierten Objekte für das aktuelle Umfeld aus der Karte 7 ab.

Die Steuerung 2 ruft die in dem Speicher 3 hinterlegte Karte 7, zumindest für das aktuelle Umfeld, ab und stellt diese abgerufene Karte 7 dem Fahrerassistenzsystem 4 bereit. Die Auswerteeinrichtung 6 des Fahrerassistenzsystems 4 ist derart ausgebildet, die erfassten Umfelddaten 8 zur Objekterkennung in Abhängigkeit der in der Karte 7 hinterlegten klassifizierten Objekte auszuwerten.

Bei einer solchen Auswertung ist vorgesehen, dass eine Existenzwahrscheinlichkeit eines in den erfassten Umfelddaten 8 nicht eindeutig erkannten Objekts auf Grundlage von mindestens einem in der Karte 7 hinterlegten klassifizierten Objekt erhöht wird. Ferner ist vorgesehen, dass ein in den erfassten Umfelddaten 8 erkanntes Objekt auf Grundlage von mindestens einem in der Karte 7 hinterlegten klassifizierten Objekt über ein Verringern seiner Existenzwahrscheinlichkeit als weniger relevant bewertet wird oder im Extremfall sogar als nicht relevantes Objekt komplett verworfen wird. Darüber hinaus kann vorgesehen sein, dass mindestens ein Parameter des Fahrerassistenzsystems 4 in Abhängigkeit von mindestens einem in der Karte 7 hinterlegten klassifizierten Objekt konfiguriert wird. Insbesondere kann beispielsweise vorgesehen sein, dass dieser mindestens eine Parameter eine Auflösung angibt, mit welcher zumindest ein Teil der erfassten Umfelddaten 8 ausgewertet wird.

Es kann ferner vorgesehen sein, dass die Auswerteeinrichtung 6 des Fahrerassistenzsystems 4 derart ausgebildet ist, ein Objekt, das in der Karte 7 hinterlegt ist, welches jedoch von der Umfeldsensorik 5 nicht erfasst wird und/oder von der Auswerteeinrichtung 6 in den erfassten Umfelddaten 8 nicht erkannt wird, trotzdem zu berücksichtigen.

Die in der Karte 7 hinterlegten Objekte können beispielsweise nach folgenden Klassen klassifiziert sein: einer Existenzwahrscheinlichkeit, einer Objektart, einer sensorikabhängigen Erfassungswahrscheinlichkeit, einer Verkehrsleitrelevanz, einer Mindestauflösung und/oder einer Witterungsabhängigkeit.

Es kann vorgesehen sein, dass die Karte 7 auf Grundlage der in den erfassten Umfelddaten 8 von der Auswerteeinrichtung 6 erkannten Objekte aktualisiert wird. Es ist jedoch hierbei darauf zu achten, dass nur bei ausreichender Wahrscheinlichkeit, dass ein aktuell erkanntes Objekt sich wirklich an der entsprechenden Position in der Karte 7 befindet und eine entsprechende Klassifizierung aufweist, dieses Objekt das bisherige Objekt in der Karte 7 ersetzen sollte. Ein Kriterium, welches beispielsweise erfüllt sein müsste, damit ein Ersetzen der Objekte und/oder der Klassifizierung durchgeführt wird, ist beispielsweise eine ausreichend hohe Auflösung, mit der das aktuelle Objekt erfasst sein muss.

Es kann ferner vorgesehen sein, dass mindestens ein Parameter 19 des Fahrerassistenzsystems 4 in Abhängigkeit von mindestens einem in der Karte 7 hinterlegten klassifizierten Objekt konfiguriert wird. Dies kann beispielsweise eine Auflösung sein, mit der die Umfeldsensorik 5 das Umfeld erfasst oder mit der die Auswerteeinrichtung 6 die erfassten Umfelddaten 8 auswertet.

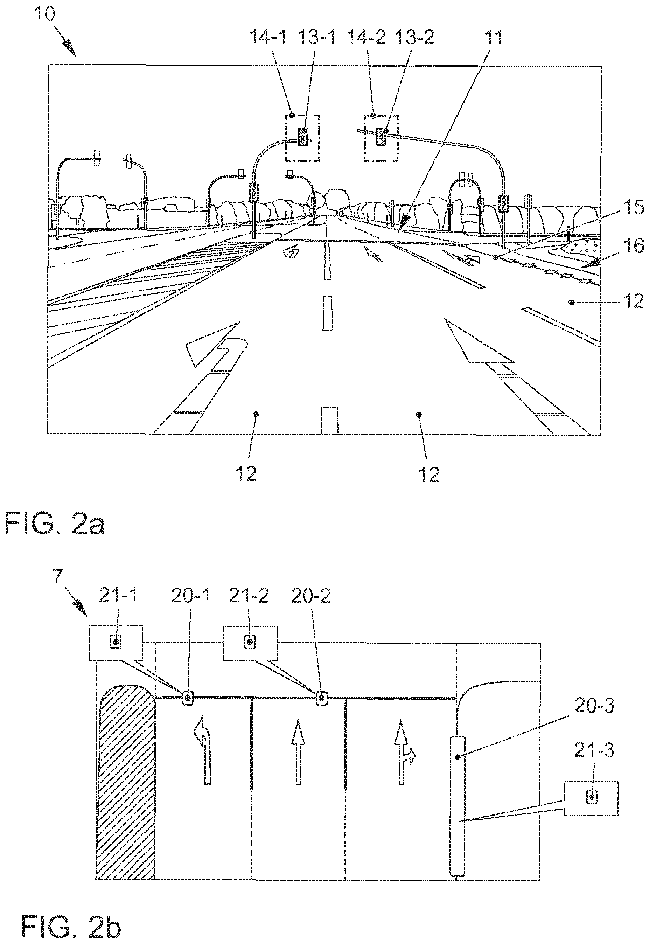

In Fig. 2a ist eine schematische Darstellung einer typischen Szene 10 im Straßenverkehr an einer Kreuzung 11 zur Verdeutlichung des Verfahrens gezeigt. Die Fig. 2b zeigt eine zu der in Fig. 2a dargestellten Szene 10 zugehörige schematische Karte 7, in der klassifizierte Objekte 20-1, 20-2, 20-3 hinterlegt sind.

Die in Fig. 2a dargestellte schematische Szene 10 entspricht beispielsweise einer von einer Kamera eines Kraftfahrzeugs in dem Moment erfassten Abbildung, wenn das Kraftfahrzeug sich der Kreuzung 11 nähert. In der schematisch dargestellten Szene 10 ist die Straßenkreuzung 11 mit mehreren Fahrspuren 12, mehreren Ampeln 13-1, 13-2 und einer beispielhaft markierten Fahrbahnmarkierung 15 zu sehen. Die schematisch dargestellte Szene 10 stellt von der Kamera erfasste Umfelddaten dar. Diese erfassten Umfelddaten werden von der Auswerteeinrichtung des Fahrerassistenzsystems in Abhängigkeit der in der Karte 7 hinterlegten klassifizierten Objekte 20-1, 20-2, 20-3 ausgewertet.

Für die Ampeln 13-1, 13-2 sind beispielsweise die Objekte 20-1 und 20-2 in der Karte 7 hinterlegt. Diese Objekte 20-1 und 20-2 weisen die Klassifizierungen 21-1, 21-2 auf. Die Klassifizierungen 21-1, 21-2 können beispielsweise angeben, dass die Objekte 20-1, 20-2 Ampeln sind. Hierbei kann insbesondere auch eine Richtungsabhängigkeit vorgesehen sein. So können die Klassifizierungen 21-1, 21-2 beispielsweise vorsehen, dass die Ampeln 13-1, 13-2 nur in Richtung des aus der dargestellten Richtung sich der Kreuzung 11 nähernden Kraftfahrzeugs zu erfassen und/oder zu erkennen sind. Insbesondere kann nun vorgesehen sein, dass aufgrund der in der Karte 7 hinterlegten klassifizierten Objekte 20-1, 20-2 mindestens ein Parameter des Fahrerassistenzsystems konfiguriert wird. Beispielsweise kann ein solcher Parameter eine Mindestauflösung angeben, mit der bestimmte Objekte bzw. Bereiche oder Raumwinkelbereiche in den erfassten Umfelddaten ausgewertet werden müssen. So kann vorgesehen sein, dass die in der Fig. 2a markierten Bereiche 14-1, 14-2, welche in einer erfassten Abbildung die Ampeln 13-1, 13-2 umfassen, mit einer höheren Auflösung erfasst und/oder ausgewertet werden. Die restlichen Bereiche, welche nicht zu den Bereichen 14-1, 14-2 gehören, werden entsprechend mit einer geringeren Auflösung erfasst und/oder ausgewertet. Hierdurch kann beim Auswerten Rechenleistung eingespart werden.

Es kann vorkommen, dass ein in der Karte 7 hinterlegtes Objekt 20-3 in den erfassten Umfelddaten nicht eindeutig erkannt wird. Beispielsweise kann dies die Fahrbahnmarkierung 15 sein, auf der sich Laubblätter 16 befinden. Die Laubblätter 16 führen dazu, dass die Umfeldsensorik die Fahrbahnmarkierung 15 nicht vollständig und zusammenhängend erfassen kann und die Auswerteeinrichtung deshalb die Fahrbahnmarkierung 15 nicht eindeutig erkennen kann. Hier ist nun vorgesehen, dass die nicht eindeutig erkannte Fahrbahnmarkierung 15 bzw. das nicht eindeutig erkannte zugehörige Objekt 20-3 auf Grundlage von dem in der Karte 7 hinterlegten klassifizierten Objekt 20-3 für die Fahrbahnmarkierung 15 als relevantes Objekt bewertet wird. Obwohl die Fahrbahnmarkierung 15 nicht eindeutig erkannt wurde, kann somit auf Grundlage des in der Karte 7 hinterlegten klassifizierten Objektes 20-3 für die Fahrbahnmarkierung 15 ein entsprechendes Objekt von dem Fahrerassistenzsystem berücksichtigt werden. Ist das Fahrerassistenzsystem beispielsweise ein Spurhalteassistent, so kann der Spurhalteassistent die Fahrbahnmarkierung 15 trotz der Überdeckung durch die Blätter 16 beim Spurhalten berücksichtigen.

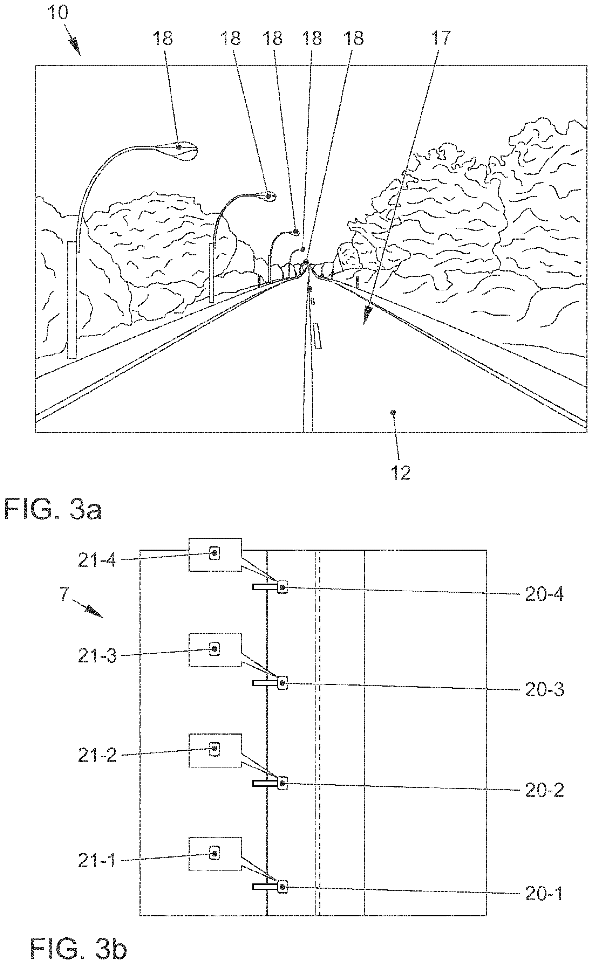

Zur Verdeutlichung der Erfindung ist in Fig. 3a eine schematische Darstellung einer weiteren typischen Szene 10 im Straßenverkehr auf einer Landstraße 17 gezeigt. Korrespondierend mit der in der Fig. 3a dargestellten Szene 10 ist in Fig. 3a eine zugehörige schematische Karte 7, in der klassifizierte Objekte 20-1, 20-2, 20-3, 20-4 hinterlegt sind, gezeigt. Die Landstraße 17 ist gesäumt von Straßenlaternen 18.

Handelt es sich bei dem Fahrerassistenzsystem beispielsweise um eine Fernlichtabblendautomatik (maskiertes Dauerfernlicht), so kann auf Grundlage der in der Karte 7 hinterlegten klassifizierten Objekte 20-1, 20-2, 20-3, 20-4, welche jeweils zu den Straßenlaternen 18 gehören, ein fälschlicherweise durchgeführte Abblenden des Fernlichts vermieden werden. Ein Kraftfahrzeug, das sich beispielsweise auf der Fahrspur 12 befindet, erfasst mittels seiner Umfeldsensorik die Lichtkegel der Straßenlaternen 18. Es kann nun vorkommen, dass die erfassten Lichtkegel der Straßenlaternen 18 von der Auswerteeinrichtung fälschlicherweise als entgegenkommende Kraftfahrzeuge erkannt werden. Mittels des beschriebenen Verfahrens wird jedoch erreicht, dass das Fahrerassistenzsystem die erfassten Umfelddaten zur Objekterkennung in Abhängigkeit der in der Karte 7 hinterlegten klassifizierten Objekte 20-1, 20-2, 20-3, 20-4 auswertet. Die den in der Karte 7 hinterlegten Objekten 20-1, 20-2, 20-3, 20-4 zugeordneten Klassifizierungen 21-1, 21-2, 21-3, 21-4 können beispielsweise angeben, dass es sich um Straßenlaternen 18 und somit um statische Lichtobjekte handelt. Aufgrund dieses Vorwissens kann die Auswerteeinrichtung die in den erfassten Umfelddaten erkannten Objekte, hier also die Lichtkegel der einzelnen Straßenlaternen 18, auf Grundlage der in der Karte 7 hinterlegten klassifizierten Objekte 20-1, 20-2, 20-3, 20-4 als nicht relevante Objekte verwerfen. Dies hat zur Folge, dass die Fernlichtabblendautomatik das Fernlicht nicht auf Abblendlicht umstellt. Hierdurch steigt der Komfort und die Sicherheit für das Kraftfahrzeug, das eine unnötige Verringerung der Beleuchtung vermieden wird.

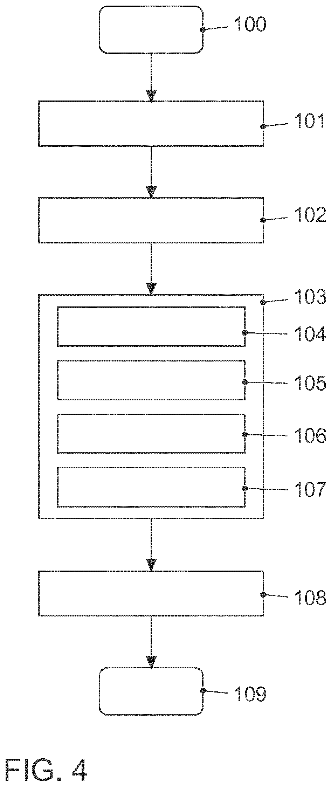

In Fig. 4 ist ein schematisches Ablaufdiagramm eines Verfahrens zum Unterstützen eines Fahrerassistenzsystems in einem Kraftfahrzeug gezeigt. Nach dem Start 100 des Verfahrens wird eine Karte mit darin hinterlegten klassifizierten Objekten in einem ersten Verfahrensschritt 101 bereitgestellt. Das Bereitstellen kann beispielsweise mittels einer Kartenerstellungseinrichtung durchgeführt werden. Alternativ kann die Karte auch in einem Speicher hinterlegt sein.

Im darauffolgenden Verfahrensschritt 102 werden Umfelddaten eines Umfelds des Kraftfahrzeugs mittels mindestens einer Umfeldsensorik eines Fahrerassistenzsystems des Kraftfahrzeugs erfasst. Eine solche Umfeldsensorik kann beispielsweise eine Kamera sein, welche Abbildungen des Umfeldes des Kraftfahrzeugs erfasst.

Es wird hierbei davon ausgegangen, dass das Kraftfahrzeug sich bereits im Umfeld lokalisiert hat, beispielsweise mittels einer hierfür ausgebildeten Einrichtung unter Berücksichtigung der Karte oder mittels eines Globalen Positionsbestimmungssystems (z.B. GPS). Erst nach diesem ersten Lokalisieren ruft die Steuerung 2 die hinterlegten klassifizierten Objekte für das aktuelle Umfeld aus der Karte 7 ab.

Anschließend werden die erfassten Umfelddaten im Verfahrensschritt 103 mittels einer Auswerteeinrichtung des Fahrerassistenzsystems ausgewertet, wobei die erfassten Umfelddaten zur Objekterkennung in Abhängigkeit der in der bereitgestellten Karte hinterlegten klassifizierten Objekte ausgewertet werden.

Hierbei ist im Verfahrensschritt 104 vorgesehen, dass eine Existenzwahrscheinlichkeit eines in den erfassten Umfelddaten nicht eindeutig erkannten Objekts auf Grundlage von mindestens einem in der Karte hinterlegten klassifizierten Objekt erhöht wird.

Zusätzlich ist im Verfahrensschritt 105 vorgesehen, dass eine Existenzwahrscheinlichkeit eines in den erfassten Umfelddaten erkannten Objekts auf Grundlage von mindestens einem in der Karte hinterlegten klassifizierten Objekt verringert wird. Über eine entsprechende Verringerung der Existenzwahrscheinlichkeit kann ein Objekt sogar komplett verworfen werden.

Zusätzlich oder alternativ kann im Verfahrensschritt 106 vorgesehen sein, dass mindestens ein Parameter des Fahrerassistenzsystems in Abhängigkeit von mindestens einem in der Karte hinterlegten klassifizierten Objekt konfiguriert wird.

Im Verfahrensschritt 107 kann ferner vorgesehen sein, dass ein Objekt, das in der Karte hinterlegt ist, welches jedoch von der Umfeldsensorik nicht erfasst wird und/oder von der Auswerteeinrichtung in den erfassten Umfelddaten nicht erkannt wird, von dem Fahrerassistenzsystem trotzdem berücksichtigt wird.

In einem letzten Verfahrensschritt 108 kann vorgesehen sein, dass die Karte auf Grundlage der in den erfassten Umfelddaten erkannten Objekte aktualisiert wird. Hierbei ist jedoch darauf zu achten, dass nur bei ausreichender Wahrscheinlichkeit, dass ein aktuelles Objekt sich wirklich an der entsprechenden Position befindet und eine entsprechende Klassifizierung aufweist, dieses Objekt das bisherige Objekt in der Karte ersetzen sollte. Ein Kriterium, welches beispielsweise erfüllt sein müsste, damit ein Ersetzen der Objekte und/oder der Klassifizierung durchgeführt wird, ist beispielsweise eine ausreichend hohe Auflösung, mit der das aktuelle Objekt erfasst sein muss. Anschließend ist das Verfahren beendet 108.

### Bezugszeichenliste

- 1: Vorrichtung
- 2: Steuerung
- 3: Speicher
- 4: Fahrerassistenzsystem
- 5: Umfeldsensorik
- 6: Auswerteeinrichtung
- 7: Karte
- 8: Umfelddaten
- 9: Kartenerstellungseinrichtung
- 10: Szene
- 11: Straßenkreuzung
- 12: Fahrspur
- 13-1: Ampel
- 13-2: Ampel
- 14-1: Bereich
- 14-2: Bereich
- 15: Fahrbahnmarkierung
- 16: Laubblätter
- 17: Landstraße
- 18: Straßenlaterne
- 19: Parameter
- 20-1: Objekt
- 20-2: Objekt
- 20-3: Objekt
- 20-4: Objekt
- 21-1: Klassifizierung
- 21-2: Klassifizierung
- 21-3: Klassifizierung
- 50: Kraftfahrzeug

## Patentansprüche

1. Verfahren zum Unterstützen eines Fahrerassistenzsystems (4) in einem Kraftfahrzeug (50), umfassend die folgenden Schritte:
Bereitstellen einer Karte (7), wobei in der Karte (7) klassifizierte Objekte (20-1, 20-2, 20-3, 20-4) an zugehörigen Positionen hinterlegt sind,
Erfassen von Umfelddaten (8) mittels mindestens einer Umfeldsensorik (5) des Fahrerassistenzsystems (4),
Auswerten der erfassten Umfelddaten (8) mittels einer Auswerteeinrichtung (6) des Fahrerassistenzsystems (4), wobei die erfassten Umfelddaten (8) zur Objekterkennung in Abhängigkeit der in der Karte (7) hinterlegten klassifizierten Objekte (20-1, 20-2, 20-3, 20-4) ausgewertet werden, wobei
eine Existenzwahrscheinlichkeit eines in den erfassten Umfelddaten erkannten Objekts (20-1, 20-2, 20-3, 20-4) durch Vergleich mit mindestens einem in der Karte (7) hinterlegten klassifizierten Objekt (20-1, 20-2, 20-3, 20-4) gleicher Relativposition verringert wird,
**dadurch gekennzeichnet, dass**
eine Existenzwahrscheinlichkeit eines in den erfassten Umfelddaten (8) nicht eindeutig erkannten Objekts (20-1, 20-2, 20-3, 20-4) durch Vergleich mit mindestens einem in der Karte hinterlegten klassifizierten Objekt (20-1, 20-2, 20-3, 20-4) gleicher Relativposition erhöht wird und vom Fahrerassistenzsystem berücksichtigt wird.

2. Verfahren nach Anspruch 1, **dadurch gekennzeichnet, dass** mindestens ein Parameter (19) des Fahrerassistenzsystems (4) in Abhängigkeit von mindestens einem in der Karte (7) hinterlegten klassifizierten Objekt (20-1, 20-2, 20-3, 20-4) konfiguriert wird.

3. Verfahren nach Anspruch 2, **dadurch gekennzeichnet, dass** der mindestens eine Parameter (19) eine Auflösung angibt, mit welcher zumindest ein Teil der erfassten Umfelddaten (8) ausgewertet wird.

4. Verfahren nach einem der vorangegangenen Ansprüche, **dadurch gekennzeichnet, dass** ein Objekt (20-1, 20-2, 20-3, 20-4), das in der Karte (7) hinterlegt ist, welches jedoch von der Umfeldsensorik (5) nicht erfasst wird und/oder von der Auswerteeinrichtung (6) in den erfassten Umfelddaten (8) nicht erkannt wird, von dem Fahrerassistenzsystem (4) berücksichtigt wird.

5. Verfahren nach einem der vorangegangenen Ansprüche, **dadurch gekennzeichnet, dass** die Objekte (20-1, 20-2, 20-3, 20-4) nach mindestens einer der folgenden Klassen klassifiziert sind oder werden: einer Existenzwahrscheinlichkeit, einer Objektart, einer sensorikabhängigen Erfassungswahrscheinlichkeit, einer Verkehrsleitrelevanz, einer Mindestauflösung und/oder einer Witterungsabhängigkeit.

6. Verfahren nach einem der vorangegangenen Ansprüche, **dadurch gekennzeichnet, dass** die Karte (7) mittels einer Kartenerstellungseinrichtung (9) bereitgestellt wird.

7. Verfahren nach einem der vorangegangenen Ansprüche, **dadurch gekennzeichnet, dass** die Karte (7) auf Grundlage der in den erfassten Umfelddaten (8) erkannten Objekte (20-1, 20-2, 20-3) aktualisiert wird.

8. Vorrichtung (1) zum Unterstützen eines Fahrerassistenzsystems (4) in einem Kraftfahrzeug (50), umfassend:
eine Steuerung (2) zum Verarbeiten einer bereitgestellten Karte (7), wobei in der Karte (7) klassifizierte Objekte (20-1, 20-2, 20-3, 20-4) an zugehörigen Positionen hinterlegt sind,
ein Fahrerassistenzsystem (4), welches mindestens eine Umfeldsensorik (5) zum Erfassen von Umfelddaten (8) und eine Auswerteeinrichtung (6) aufweist,
wobei die Auswerteeinrichtung (6) derart ausgebildet ist, die erfassten Umfelddaten (8) zur Objekterkennung in Abhängigkeit der in der Karte (7) hinterlegten klassifizierten Objekte (20-1, 20-2, 20-3, 20-4) auszuwerten, wobei die Auswerteeinrichtung (6) derart ausgebildet ist, dass eine Existenzwahrscheinlichkeit eines in den erfassten Umfelddaten erkannten Objekts (20-1, 20-2, 20-3, 20-4) durch Vergleich mit mindestens einem in der Karte (7) hinterlegten klassifizierten Objekt (20-1, 20-2, 20-3, 20-4) gleicher Relativposition verringert wird,
**dadurch gekennzeichnet, dass**
die Auswerteeinheit (6) weiter derart ausgebildet ist, dass eine Existenzwahrscheinlichkeit eines in den erfassten Umfelddaten (8) nicht eindeutig erkannten Objekts (20-1, 20-2, 20-3, 20-4) durch Vergleich mit mindestens einem in der Karte (7) hinterlegten klassifizierten Objekt (20-1, 20-2, 20-3, 20-4) gleicher Relativposition erhöht wird und vom Fahrerassistenzsystem (4) berücksichtigt wird.

## Claims

1. Method for supporting a driver assistance system (4) in a motor vehicle (50), comprising the following steps:
providing a map (7), wherein the map (7) stores classified objects (20-1, 20-2, 20-3, 20-4) at associated positions,
acquiring surroundings data (8) by way of at least one surroundings sensor system (5) of the driver assistance system (4),
evaluating the acquired surroundings data (8) by way of an evaluation device (6) of the driver assistance system (4), wherein the acquired surroundings data (8) are evaluated in order to recognize objects on the basis of the classified objects (20-1, 20-2, 20-3, 20-4) stored in the map (7), wherein
a probability of existence of an object (20-1, 20-2, 20-3, 20-4) recognized in the acquired surroundings data is reduced through comparison with at least one classified object (20-1, 20-2, 20-3, 20-4) with the same relative position stored in the map (7),
**characterized in that**
a probability of existence of an object (20-1, 20-2, 20-3, 20-4) not recognized unambiguously in the acquired surroundings data (8) is increased through comparison with at least one classified object (20-1, 20-2, 20-3, 20-4) with the same relative position stored in the map and is taken into consideration by the driver assistance system.

2. Method according to Claim 1, **characterized in that** at least one parameter (19) of the driver assistance system (4) is configured on the basis of at least one classified object (20-1, 20-2, 20-3, 20-4) stored in the map (7).

3. Method according to Claim 2, **characterized in that** the at least one parameter (19) indicates a resolution with which at least a portion of the acquired surroundings data (8) is evaluated.

4. Method according to one of the preceding claims, **characterized in that** an object (20-1, 20-2, 20-3, 20-4) that is stored in the map (7) but that is not detected by the surroundings sensor system (5) and/or is not recognized by the evaluation device (6) in the acquired surroundings data (8) is taken into consideration by the driver assistance system (4).

5. Method according to one of the preceding claims, **characterized in that** the objects (20-1, 20-2, 20-3, 20-4) are classified in accordance with at least one of the following classes: a probability of existence, an object type, a sensor system-dependent probability of detection, a traffic management relevance, a minimum resolution and/or a weather dependency.

6. Method according to one of the preceding claims, **characterized in that** the map (7) is provided by way of a map creation device (9).

7. Method according to one of the preceding claims, **characterized in that** the map (7) is updated on the basis of the objects (20-1, 20-2, 20-3) recognized in the acquired surroundings data (8).

8. Apparatus (1) for supporting a driver assistance system (4) in a motor vehicle (50), comprising:
a controller (2) for processing a provided map (7), wherein the map (7) stores classified objects (20-1, 20-2, 20-3, 20-4) at associated positions,
a driver assistance system (4) that has at least one surroundings sensor system (5) for acquiring surroundings data (8) and an evaluation device (6),
wherein the evaluation device (6) is designed to evaluate the acquired surroundings data (8) in order to recognize objects on the basis of the classified objects (20-1, 20-2, 20-3, 20-4) stored in the map (7), wherein the evaluation device (6) is designed such that a probability of existence of an object (20-1, 20-2, 20-3, 20-4) recognized in the acquired surroundings data is reduced through comparison with at least one classified object (20-1, 20-2, 20-3, 20-4) with the same relative position stored in the map (7),
**characterized in that**
the evaluation unit (6) is furthermore designed such that a probability of existence of an object (20-1, 20-2, 20-3, 20-4) not recognized unambiguously in the acquired surroundings data (8) is increased through comparison with at least one classified object (20-1, 20-2, 20-3, 20-4) with the same relative position stored in the map (7) and is taken into consideration by the driver assistance system (4).

## Revendications

1. Procédé de support d'un système d'aide à la conduite (4) dans un véhicule automobile (50), ledit procédé comprenant les étapes suivantes :
fournir une carte (7), des objets classés (20-1, 20-2, 20-3, 20-4) étant mémorisés dans la carte (7) à des positions associées,
acquérir des données d'environnement (8) à l'aide d'au moins un ensemble de capteurs d'environnement (5) du système d'aide à la conduite (4),
évaluer les données d'environnement acquises (8) à l'aide d'un module d'évaluation (6) du système d'aide à la conduite (4), les données d'environnement acquises (8) étant évaluées afin d'effectuer une reconnaissance d'objets en fonction des objets classés (20-1, 20-2, 20-3, 20-4) mémorisés dans la carte (7),
une probabilité d'existence d'un objet (20-1, 20-2, 20-3, 20-4) reconnu dans les données d'environnement acquises étant réduite par comparaison avec au moins un objet classé (20-1, 20-2, 20-3, 20-4) de même position relative mémorisé dans la carte (7),
**caractérisé en ce que**
une probabilité d'existence d'un objet (20-1, 20-2, 20-3, 20-4) non clairement reconnu dans les données d'environnement acquises (8) est augmentée par comparaison avec au moins un objet classé (20-1, 20- 2, 20-3, 20-4) de même position relative et est prise en compte par le système d'aide à la conduite.

2. Procédé selon la revendication 1, **caractérisé en ce qu'**au moins un paramètre (19) du système d'aide à la conduite (4) est configuré en fonction d'au moins un objet classé (20-1, 20-2, 20-3, 20-4) mémorisé dans la carte (7).

3. Procédé selon la revendication 2, **caractérisé en ce que** l'au moins un paramètre (19) indique une résolution avec laquelle au moins une partie des données d'environnement acquises (8) est évaluée.

4. Procédé selon l'une des revendications précédentes, **caractérisé en ce qu'**un objet (20-1, 20-2, 20-3, 20-4), qui est mémorisé dans la carte (7), mais qui n'est pas reconnu par l'ensemble de capteurs d'environnement (5) et/ou qui n'est pas reconnu par le module d'évaluation (6) dans les données d'environnement acquises (8), est pris en compte par le système d'aide à la conduite (4).

5. Procédé selon l'une des revendications précédentes, **caractérisé en ce que** les objets (20-1, 20-2, 20-3, 20-4) sont classés selon l'une au moins des classes suivantes : une probabilité d'existence, un type d'objet, une probabilité d'acquisition dépendant de l'ensemble de capteurs, une pertinence de gestion du trafic, une résolution minimale et/ou une dépendance aux conditions météorologiques.

6. Procédé selon l'une des revendications précédentes, **caractérisé en ce que** la carte (7) est fournie au moyen d'un module de création de carte (9).

7. Procédé selon l'une des revendications précédentes, **caractérisé en ce que** la carte (7) est actualisée à partir des objets (20-1, 20-2, 20-3) reconnus dans les données d'environnement acquises (8).

8. Dispositif (1) de support d'un système d'aide à la conduite (4) dans un véhicule automobile (50), ledit dispositif comprenant :
une commande (2) destinée à traiter une carte fournie (7), des objets classés (20-1, 20-2, 20-3, 20-4) étant mémorisés dans la carte (7) à des positions associées,
un système d'aide à la conduite (4) qui comporte au moins un ensemble de capteurs d'environnement (5) destiné à l'acquisition de données d'environnement (8) et un module d'évaluation (6),
le module d'évaluation (6) étant conçu pour évaluer les données d'environnement acquises (8) afin d'effectuer une reconnaissance d'objets en fonction des objets classés (20-1, 20-2, 20-3, 20-4) mémorisés dans la carte (7), le module d'évaluation (6) étant conçu pour réduire une probabilité d'existence d'un objet (20-1, 20-2, 20-3, 20-4) reconnu dans les données d'environnement acquises par comparaison avec au moins un objet classé (20-1, 20-2, 20-3, 20-4) de même position relative mémorisé dans la carte (7),
**caractérisé en ce que**
l'unité d'évaluation (6) est en outre conçue pour qu'une probabilité d'existence d'un objet (20-1, 20-2, 20-3, 20-4) non clairement reconnu dans les données d'environnement acquises (8) soit augmentée par comparaison avec au moins un objet classé (20-1, 20-2, 20-3, 20-4) de même position relative et soit prise en compte par le système d'aide à la conduite (4).
